# EUROPÄISCHE PATENTSCHRIFT

(11) **EP 1 400 830 B1**
(45) Veröffentlichungstag und Bekanntmachung des Hinweises auf die Patenterteilung: **25.01.2006**
(21) Anmeldenummer: 03021030.6
(22) Anmeldetag: 17.09.2003
(51) Int. Cl.: G02B 21/18, G02B 21/22, G02B 21/00

(54) **Mikroskopiesystem und Mikroskopieverfahren für mehrere Beobachter**
Microscope system and method for multiple observers
Système et méthode de microscopie pour plusieurs observateurs

(30) Priorität: 20.09.2002 DE 10243852
(43) Veröffentlichungstag der Anmeldung: 24.03.2004
(73) Patentinhaber: Carl Zeiss Surgical GmbH, 73447 Oberkochen (DE)
(72) Erfinder: Hermann, Karlheinz, 73434 Aalen (DE); Rudolph, Frank, 73431 Aalen (DE); Schneider, Martin, 89551 Königsbronn (DE); Steffen, Joachim, Dr., 73463 Westhausen (DE); Wirth, Michael, 73434 Aalen (DE)
(74) Vertreter: Diehl & Partner

(56) Entgegenhaltungen:
- EP-A- 1 235 094
- WO-A-00/68724
- WO-A-01/27659
- WO-A-96/20421
- WO-A-98/13716
- DE-A- 4 134 481
- US-A1- 2001 050 808
- US-A1- 2003 112 509
- US-B1- 6 327 079

## Beschreibung

Die vorliegende Erfindung betrifft ein Mikroskopiesystem und ein Mikroskopieverfahren für mehrere Beobachter.

Insbesondere betrifft die Erfindung ein Stereomikroskop, wie etwa ein Operationsmikroskop für mehrere Beobachter, oder ein Mikroskop für mehrere Beobachter, welches für andere Zwecke, wie etwa für einen Einsatz in der Materialforschung, vorgesehen ist.

Aus US 6,327,079 B1 ist ein Operationsmikroskop bekannt, welches für zwei Beobachter jeweils ein Stereo-Okularsystem bereitstellt, wobei Schwenkstellungen der Okulare um eine optische Achse eines Objektivs des Mikroskops änderbar sind.

Aus WO 96/20421 ist ein Mikroskopiesystem für einen Beobachter bekannt, bei welchem Darstellungen von elektronisch erzeugten Bildern in einen Strahlengang eines Okularsystems eingekoppelt werden.

Aus EP 1 235 094 A2 ist ein Mikroskopiesystem für zwei Beobachter bekannt, welches zwei Okularsysteme und einen Bildprojektor mit einer Anzeigevorrichtung umfaßt, um eine mit der Anzeigevorrichtung erzeugte Darstellung in die Strahlengänge beider Okularsysteme einzukoppeln.

Es besteht ein zunehmender Bedarf danach, in Strahlengänge eines Mikroskopiesystems für mehrere Beobachter elektronisch erzeugte Bilder einzukoppeln. Hierbei besteht ein Problem darin, daß bei den herkömmlichen Lösungen der Bildeinkopplung eine relative Ausrichtung zwischen den lichtoptisch erzeugten mikroskopischen Bildern und den eingekoppelten elektronisch erzeugten Bildern in manchen Situationen nicht zufriedenstellend erreicht werden kann.

Entsprechend ist es eine Aufgabe der vorliegenden Erfindung, ein Mikroskopiesystem und ein Mikroskopieverfahren für mehrere Beobachter vorzuschlagen, bei denen relative Bildausrichtungen zwischen lichtoptisch erzeugten Mikroskopbildern und elektronisch erzeugten Bildern besser übereinstimmen.

Diese Aufgabe wird gelöst durch die Bereitstellung eines Mikroskopiesystems gemäß beiliegendem Anspruch 1 und eines Mikroskopieverfahrens gemäß beiliegendem Anspruch 11.

Gemäß einer ersten Ausführungsform ist der wenigstens eine Okulartubus des ersten Okularsystems um eine optische Achse des Objektivs verschwenkbar, und die Steuerung ist dazu ausgebildet, das angezeigte Bild aus dem ersten Eingabebild durch Drehen um einen in Abhängigkeit von einer Schwenkstellung des Okulartubus um die optische Achse bestimmten Bilddrehwinkel zu erzeugen.

Gemäß einer zweiten Ausführungsform weist das erste Okularsystem ein Zoomsystem zur änderbaren Einstellung einer Vergrößerung des Bildes der Objektebene auf, und die Steuerung ist dazu ausgebildet, das von der Anzeigevorrichtung angezeigte Bild aus einem ersten Eingabebild durch Vergrößern um einen in Abhängigkeit von der Vergrößerung des Zoomsystems bestimmten Vergrößerungsfaktor zu erzeugen.

Das erste Eingabebild kann beispielsweise ein Bild sein, welches in Relation zu dem lichtoptisch betrachteten Objekt steht. Beispielsweise kann das erste Eingabebild ein Bild sein, welches mit anderen bildgebenden Verfahren gewonnen wurde, wie etwa Computertomographie (CT) oder Magnetresonanztomographie (NMR) oder Fluoreszenzaufnahmen. Das erste Eingabebild kann hierbei aus dreidimensionalen Daten der Tomographieaufnahmen unter Berücksichtigung einer Position des Mikroskops relativ zu dem beobachteten Objekt vorab erzeugt sein. Es ist dann möglich, dieses Eingabebild an die aktuelle Beobachtungssituation des Betrachters anzupassen, wie etwa einer Schwenkstellung des Okulartubus, in welchen der Betrachter Einblick nimmt, um die optische Achse des Objektivs oder einer eingestellten Vergrößerung des Zoomsystems des Okulartubus, in welchen der Betrachter Einblick nimmt.

Das erste Eingabebild steht hierbei insofern in Relation zu dem lichtoptisch erzeugten Bild, als daß Strukturen bzw. Topologien des lichtoptischen Bildes mit Strukturen bzw. Topologien des ersten Eingabebilds übereinstimmen bzw. diesen entsprechen. So kann das erste Eingabebild beispielsweise einen Umriß etwa eines Blutgefäßes oder eines Tumorgewebes mit hohem Kontrast darstellen, wobei das Blutgefäß oder Tumorgewebe im Bildfeld des lichtoptisch erzeugten Bildes zwar enthalten, allerdings nicht mit optimalen Kontrast sichtbar ist.

Gemäß einer weiteren Ausführungsform ist vorgesehen, dem lichtoptisch beobachteten Bild ein zweites Eingabebild zu überlagern, welches unabhängig von der wenigstens einen optischen Einstellung des jeweiligen Okularsystems, wie etwa der Schwenkstellung des Okulartubus oder der Vergrößerung des Zoomsystems ist. Das zweite Eingabebild ist dann beispielsweise ein Bild, welches geeignete Daten repräsentiert, die für den Betrachter von Interesse sind, wie beispielsweise Informationen zum Blutdruck eines operierten Patienten oder ähnliches. Diese Daten sollen für den Betrachter immer auf eine gleiche Weise sichtbar sein und sollen damit unabhängig von der Einstellung des Okularsystems sein.

Das zweite Eingabebild steht hierbei insofern nicht in unmittelbarer Relation zu dem lichtoptisch erzeugten Bild, als daß dessen Strukturen bzw. Topologien nicht unmittelbar Strukturen bzw. Topologien des lichtoptischen Bildes entsprechen. Das zweite Eingabebild stellt damit vorzugsweise Information dar, welche lediglich indirekt in Relation zu dem lichtoptischen Bild steht. Beispielsweise stellt das zweite Eingabebild Daten numerisch oder als Balkendiagramm oder in anderer Weise graphisch dar.

Gemäß einer Ausführungsform des Mikroskopieverfahrens ist wenigstens ein Teil der ersten Optik um eine Achse verlagerbar, und das elektronische Erzeugen der wenigstens einen Darstellung umfasst ein Drehen der Darstellung in Abhängigkeit von einer Verlagerung des Teils der ersten Optik um die Achse.

Gemäß einer weiteren Ausführungsform umfasst das elektronische Erzeugen ein Skalieren der Darstellung in Abhängigkeit von einer eingestellten Vergrößerung der ersten Optik.

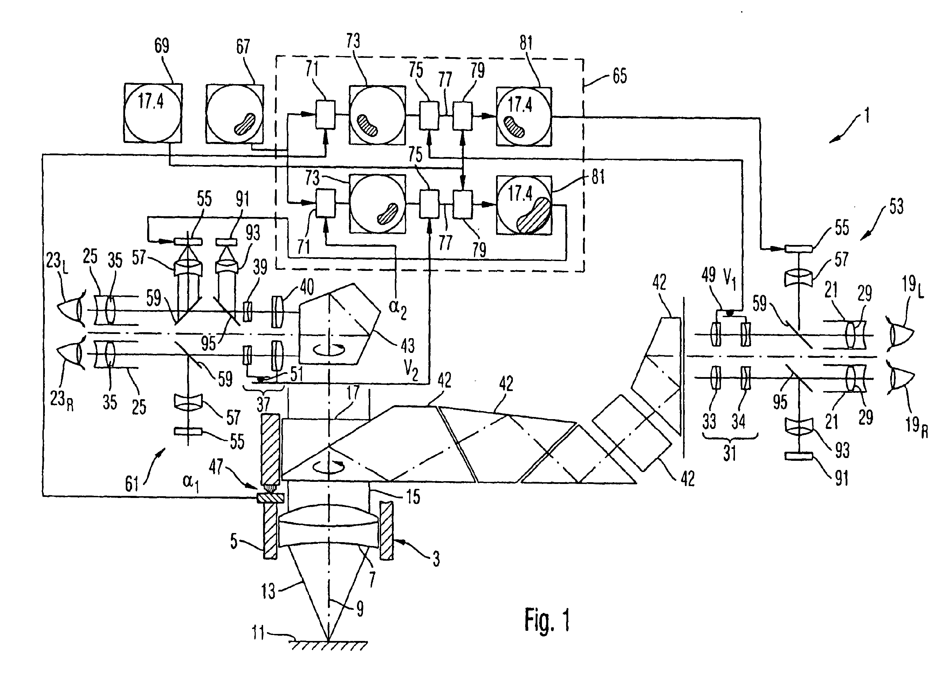

Ausführungsformen der Erfindung werden nachfolgend anhand der Figur 1 erläutert, welche eine schematische Darstellung einer Ausführungsform eines erfindungsgemäßen Mikroskopiesystems zeigt.

Figur 1 zeigt in schematischer Darstellung ein Mikroskopiesystem 1 mit einem Objektivsystem 3, welches ein Objektivgehäuse 5 und ein von den Objektivsystem gehaltenes Linsensystem 7 aufweist. Das Linsensystem 7 hat eine optische Achse 9 und dient zur Überführung eines von einer Objektebene 11 austretenden objektseitigen Strahlenbündels 13 in ein bildseitiges Strahlenbündel 15, welches in der Ausführungsform der Figur 1 ein paralleles Strahlenbündel ist, allerdings nicht unbedingt ein paralleles Strahlenbündel sein muß.

In dem bildseitigen Strahlenbündel 15 ist ein Teilerprisma 17 angeordnet, um das bildseitige Strahlenbündel 15 für zwei Betrachter aufzuteilen:

Ein erster Betrachter mit einem linken Auge 19L und einem rechten Auge 19R erhält durch Einblick in einen Stereo-Okulartubus 21 ein vergrößertes Bild der Objektebene 11, und ein zweiter Betrachter mit einem linken Auge 23L und einem rechten Auge 23R erhält durch Einblick in einen Stereo-Okuluartubus 25 ebenfalls ein vergrößertes Bild der Objektebene 11.

Der Okulartubus 21 umfasst zwei Einzeltuben, welche jeweils ein Okular 29 und ein Zoomsystem 31 mit zwei relativ zueinander verschiebbaren Zoomgliedern 33 und 34 umfassen.

Entsprechend umfasst der Stereo-Okulartubus 25 zwei Einzeltuben mit Okularen 35 und jeweils einem Zoomsystem 37 mit Zoomlinsen 39 und 40, welche relativ zueinander verschiebbar sind, um eine Vergrößerung des für den Betrachter lichtoptisch dargestellten Bildes zu ändern.

Zwischen dem Teilerprisma 17 und dem Stereo-Okulartubus 21 sind eine Mehrzahl von Prismen 42 vorgesehen, um den bildseitigen Strahl 15 auf geeignete Weise zu dem Okulartubus 21 zu führen und um weitere Verdrehungen des Stereo-Okulartubus 21 zu ermöglichen.

Zwischen dem Teilerprisma 17 und dem anderen Stereo-Okulartubus 25 ist für eine geeignete Strahlführung ein Umkehrprisma 43 vorgesehen. Das Teilerprisma 17 ist relativ zu dem Objektivgehäuse 15 um die optische Achse 9 verdrehbar, so daß der erste Betrachter mit seinen Augen 19L, 19R seine Position um die optische Achse 9 ändern kann. Für eine Feststellung der Drehstellung ist ein Drehstellungssensor 47 vorgesehen, der eine Drehstellung des Teilerprismas 17 relativ zu dem Objektivgehäuse 5 registriert.

Ebenso ist auch das Prisma 43 um die optische Achse 9 verdrehbar, und zur Feststellung einer Verdrehstellung des Prismas 43 um die optische Achse 9 ist ebenfalls ein Drehstellungssensor vorgesehen, welcher allerdings in Figur 1 der Übersichtlichkeit halber nicht dargestellt ist.

Ferner ist ein Wegsensor 49 vorgesehen, welcher die vom ersten Betrachter eingestellte Vergrößerung V₁ des Zoomsystems 31 durch Messen eines Abstands zwischen den beiden Zoom-Komponenten 33 und 34 mißt. Ein entsprechender Wegsensor 51 ist im Zoomsystem 37 des zweiten Betrachters vorgesehen, um die von diesem gewählte Vergrößerung V₂ für dessen ZoomSystem 37 zu registrieren.

In dem Strahlengang für den ersten Betrachter ist ein Bildprojektor 53 vorgesehen, um in den Strahlengang für das linke Auge 19L des ersten Betrachters ein elektronisch erzeugtes Bild einzublenden und in Überlagerung mit dem lichtoptisch erzeugten Bild der Objektebene 11 zu bringen, welches durch die bisher beschriebenen optischen Komponenten 7, 17, 42, 31 und 29 erzeugt wird. Der Bildprojektor 53 umfasst ein LCD-Display 55, eine Adapteroptik 57 und einen Einkoppelspiegel 59, welche fest an dem Tubus 21 angekoppelt sind.

In dem Strahlengang für den zweiten Betrachter ist ein ähnlicher Bildprojektor 61 vorgesehen, allerdings ist dieser doppelt ausgeführt, so daß beiden Augen 23L und 23R des zweiten Betrachters jeweils ein elektronisch erzeugtes Bild zugeführt werden kann. Der Bildprojektor 61 umfasst paarweise ein LCD-Display 55, eine Adapteroptik 57 und einen Einkoppelspiegel 59, welche fest an dem Tubus 25 angekoppelt sind.

Zur Erzeugung der durch die Bildprojektoren 53 und 61 darzustellenden Bilder ist eine Steuerung 65 vorgesehen. Diese soll die elektronischen Bilder für die Projektoren 53 und 61 jeweils so erzeugen, daß die Überlagerung der elektronischen Bilder mit den durch den jeweiligen Betrachter wahrgenommenen lichtoptischen Mikroskopiebilder jeweils korrekt erfolgt, d.h. unter Berücksichtigung einer Vergrößerung V₁, V₂ der Zoomsysteme 31 und 37 und ferner unter Berücksichtigung der Drehstellung α₁, α₂ der Betrachter um die optische Achse 9.

Das darzustellende Bild wiederum ist aus zwei Komponenten zusammengesetzt, nämlich einem ersten Eingabebild 67 und einem zweiten Eingabebild 69. Das erste Eingabebild 67 beinhaltet eine Darstellung einer aus einer computertomographischen Untersuchung gewonnene Struktur, beispielsweise ein Tumorgewebe, welches in Figur 1 nierenförmig symbolisiert ist. Das zweite Eingabebild 69 beinhaltet eine Dateneinblendung für die Betrachter, welche einen Zustand eines unter Zuhilfenahme des Mikroskopiesystems 1 operierten Patienten repräsentiert, beispielsweise ein Blutdruck, eine Pulsfrequenz, eine Sauerstoffsättigung des Blutes oder ähnliches. Die Dateneinblendung ist in Figur 1 durch die Zahl "17,4" symbolisiert.

Die Dateneinblendung des zweiten Eingabebilds 69 soll für einen jeden Betrachter immer gleich groß und unter gleicher Orientierung erscheinen, d.h. unabhängig von seiner Drehstellung α₁, α₂ um die optische Achse 9 des Objektivs 3 und unabhängig von der gewählten Vergrößerung V₁, V₂ des jeweiligen Zoomsystems 31 bzw. 37.

Das erste Eingabebild hingegen soll immer in Überlagerung mit dem lichtoptisch erzeugten Bild der Objektebene 11 stehen und mit einer Struktur des Bildes 11 in Übereinstimmung sein und wird deshalb in Abhängigkeit von der gewählten Vergrößerung V₁ bzw. V₂ der Zoomsysteme 31, 37 abgeändert. Ferner wird das erste Eingabebild abgeändert in Abhängigkeit von der Winkelstellung α₁, α₂ des jeweiligen Betrachters um die optische Achse 9. Hierzu umfasst die Steuerung 65 für einen jeden Betrachter eine Bilddreheinheit 71, welcher das erste Eingabebild 67 zugeführt wird. Ferner wird der jeweiligen Bilddreheinheit 71 der von dem jeweiligen Drehwinkelsensor 47 ermittelte Drehwinkel α₁ bzw. α₂ des jeweiligen Betrachters zugeführt. Die Bilddreheinheit 71 dreht das erste Eingabebild um den jeweiligen Drehwinkel α₁ bzw. α₂ und gibt das Ergebnis als gedrehtes Eingabebild 73 aus.

Die Steuerung 65 umfasst ferner für einen jeden Betrachter eine Bildvergrößerungseinheit 75, welche das gedrehte Bild 73 als Eingabe erhält und welche als weitere Eingabe die von dem jeweiligen Betrachter gewählte Vergrößerung V₁ bzw. V₂ erhält, wie sie von den Sensoren 49 bzw. 51 registriert werden. Die Vergrößerungseinheit 75 nimmt eine Vergrößerung des gedrehten Bildes 73 in Abhängigkeit von den Vergrößerungen V₁ und V₂ vor und gibt das Ergebnis als gedrehtes und vergrößertes Bild 77, welches in Figur 1 der Übersichtlichkeit halber nicht separat dargestellt ist, an eine Bildaddiereinheit 79 aus. Die Bildaddiereinheit 79 erhält weiter als Eingabe das zweite Eingabebild 69 und bringt das Eingabebild 69 in Überlagerung mit dem gedrehten und vergrößerten Bild 77. Das Ergebnis wird als darzustellendes elektronisches Bild 81 ausgegeben.

Das jeweils erzeugte darzustellende elektronische Bild 81 wird an das jeweilige LCD-Display 55 ausgegeben und durch dieses dargestellt, so daß ein jeder Betrachter eine Überlagerung des lichtmikroskopisch erzeugten Bilds der Objektebene 11, des Daten-Eingabebilds 69 und des Eingabebilds 67 in korrekter Orientierung erhält, welches die in Bezug zu dem beobachteten Objekt stehenden CT-Daten repräsentiert.

Mit dem geschilderten Mikroskopiesystem 1 ist es somit möglich, daß ein jeder Betrachter eine in Bezug zu dem betrachteten Objekt stehende elektronische Darstellung mit korrekter Orientierung und korrekter Vergrößerung in Überlagerung mit dem beobachteten Objekt erhält und weitere nicht direkt in Beziehung zu dem beobachteten Objekt stehende Daten unabhängig von Orientierung und vergrößerung in gleichbleibender Darstellung erhält.

In der vorangehend geschilderten Ausführungsform werden die elektronischen Darstellungen jeweils zwei Betrachtern in die Strahlengänge eingekoppelt. Es ist jedoch auch möglich, das Mikroskopiesystem abzuwandeln und lediglich einem der Betrachter entsprechende Darstellungen einzuspiegeln. Alternativ ist es auch möglich, das System zu erweitern für eine größere Zahl von Betrachtern und auch diesen die entsprechenden Darstellungen einzuspiegeln. Hierbei können auch Abwandlungen dahingehend getroffen werden, daß lediglich das Eingabebild 69 einem oder mehreren Betrachtern eingespiegelt wird oder lediglich das Eingabebild 67 einem oder mehreren Betrachtern eingespiegelt wird und lediglich Teilmengen von Betrachtern beide Eingabebilder 69 und 67 eingespiegelt werden.

Alternativ zur Bestimmung der Drehwinkel α₁, α₂ durch Drehstellungssensoren 47 oder zur Bestimmung der Vergrößerungen V₁ und V₂ durch Positionssensoren 49 und 51 ist auch eine alternative in Figur 1 angedeutete Vorgehensweise möglich:

Hierzu umfassen die Strahlengänge für einen jeden Beobachter jeweils eine CCD-Kamera 91, welche über eine Kameraadapteroptik 93 und einen Auskoppelspiegel 95 ein Bild der Objektebene 11 so aufnimmt, wie es die Augen 19R bzw. 23L der Betrachter wahrnehmen.

Die Steuerung liest die durch die Kameras 91 gewonnen Bilder aus und vergleicht diese miteinander. Aus dem Bildvergleich kann die Steuerung 65 dann zum einen einen Unterschied in den von den beiden Betrachtern eingestellten Vergrößerungen V₁ und V₂ ermitteln. Ferner kann die Steuerung aus dem Vergleich der durch die beiden Kameras 91 aufgenommenen Bilder einen Unterschied in den Drehstellungen α₁ und α₂ der beiden Betrachter ermitteln. Damit kann die Steuerung 65 allein auf elektronische Weise und ohne die Notwendigkeit der mechanischen Sensoren 47, 49, 51 die notwendigen Daten V₁, V₂, α₁ und α₂ ermitteln, um die elektronischen Bilder 81 wie vorangehend beschrieben aus den Eingabebildern 67 und 69 zu erzeugen, sofern eine der Vergrößerungen V₁ oder V₂ und einer der Winkel α₁ oder α₂ anderweitig ermittelt wurde oder festgelegt ist.

In der anhand der Fig. 1 beschriebenen Ausführungsform wird dem ersten Beobachter lediglich in das linke Auge 19L ein elektronisch erzeugtes Bild eingeblendet, während in das andere Auge 19R kein elektronisches Bild eingeblendet wird. Es ist jedoch auch möglich, in beide Augen 19L und 19R des ersten Beobachters elektronische Bilder einzublenden, wie dies für den Strahlengang des zweiten Beobachters mit Augen 23L und 23R erläutert wurde. Umgekehrt ist es auch möglich, dem zweiten Beobachter lediglich in dem Strahlengang für eines seiner Augen 23L und 23R ein elektronisch erzeugtes Bild einzublenden.

Es wird zusammenfassend ein Mikroskopiesystem vorgeschlagen, welches eine Überlagerung eines stereomikroskopischen Bildes mit einem elektronisch erzeugten Bild ermöglicht. Das elektronisch erzeugte Bild besteht wiederum aus zwei Eingabebildern, von denen eines unabhängig von einer Drehstellung eines Okulartubus um die optische Achse eines Objektivs ist und welches ferner unabhängig von einer gewählten Vergrößerung ist. Ferner ist ein zweites Eingabebild abhängig von der Drehstellung und der Vergrößerung.

## Patentansprüche

1. Mikroskopiesystem zur Beobachtung eines in einer Objektebene (11) anordenbaren Objekts, wobei das Mikroskopiesystem umfaßt:
wenigstens ein Objektiv (3) zum Empfang eines von der Objektebene (11) ausgehenden objektseitigen Strahlenbündels (13) und zur Überführung des objektseitigen Strahlenbündels (13) in ein bildseitiges Strahlenbündel (15),
mehrere Okularsysteme (21, 25), wobei ein jedes der mehreren Okularsysteme (21, 25) wenigstens einen Okulartubus mit wenigstens einem Okular umfaßt, um aus dem bildseitigen Strahlenbündel (15) für jeweils einen Betrachter (19L, 19R, 23L, 23R) ein Bild der Objektebene (11) zu erzeugen, wobei wenigstens eine optische Einstellung (α₁, α₂, V₁, V₂) eines ersten der mehreren Okularsysteme (21, 25) unabhängig von einer entsprechenden optischen Einstellung eines zweiten der mehreren Okularsysteme (21, 25) änderbar ist,
wenigstens einen Bildprojektor (53, 61) mit einer Anzeigevorrichtung (55) zur Einkopplung eines Bildes (81) der Anzeigevorrichtung in einen Strahlengang eines der Okularsysteme derart, daß das Bild der Objektebene (11) für den Betrachter in Überlagerung mit dem Bild (81) der Anzeigevorrichtung (55) erscheint, und
eine Steuerung (65) zur Erzeugung des von der Anzeigevorrichtung (55) angezeigten Bildes (81),
**dadurch gekennzeichnet, daß**
ein jedes der mehreren Okularsysteme (21, 25) einen Bildprojektor (53, 61) mit einer Anzeigevorrichtung (55) zur Einkopplung eines Bildes (81) der Anzeigevorrichtung in einen Strahlengang des jeweiligen Okularsystems (21, 25) umfasst, und
die Steuerung(65) dazu ausgebildet ist, das durch die Anzeigevorrichtung (55) des ersten der mehreren Okularsysteme (21, 25) angezeigte Bild (81) aus einem ersten Eingabebild (67) in Abhängigkeit von der wenigstens einen optischen Einstellung (α₁, α₂, V₁, V₂) des ersten Okularsystems zu erzeugen.

2. Mikroskopiesystem nach Anspruch 1, wobei die Steuerung (65) ferner dazu ausgebildet ist, das angezeigte Bild (81) aus einem dem ersten Eingabebild (67) überlagerten zweiten Eingabebild (69) zu erzeugen, und zwar unabhängig von der wenigstens einen optischen Einstellung (α₁, α₂, V₁, V₂) des ersten Okularsystems.

3. Mikroskopiesystem nach Anspruch 1 oder 2, wobei das erste Okularsystem eine erste Kamera (91) und das zweite Okularsystem eine zweite Kamera (91) umfaßt, und wobei die Steuerung (65) dazu ausgebildet ist, die wenigstens eine optische Einstellung (α₁, α₂, V₁, V₂) in Abhängigkeit von einem Vergleich des von der ersten Kamera (91) aufgenommenen Bildes mit dem von der zweiten Kamera (91) aufgenommenen Bild zu bestimmen.

4. Mikroskopiesystem nach einem der Ansprüche 1 bis 3, wobei das Objektiv eine optische Achse (9) aufweist, wobei der Okulartubus des ersten Okularsystems (21, 25) um das Objektiv (3) und die optische Achse (9) verschwenkbar ist und die wenigstens eine optische Einstellung (α₁, α₂) die Schwenkstellung des Okulartubus (21, 25) um die optische Achse (9) umfaßt, und wobei die Steuerung(65) dazu ausgebildet ist, das angezeigte Bild (81) aus dem ersten Eingabebild (67) durch Drehen um einen in Abhängigkeit von der Schwenkstellung des Okulartubus (21, 25) bestimmten Bilddrehwinkel (α₁, α₂) zu erzeugen.

5. Mikroskopiesystem nach Anspruch 4, ferner umfassend einen Winkelsensor (47) zum Erfassen eines Schwenkwinkels (α₁) zwischen dem Okulartubus (21) und einer Halterung (5) des Objektivs (3), und wobei die Steuerung (65) dazu ausgebildet ist, den Bilddrehwinkel in Abhängigkeit von dem erfaßten Schwenkwinkel (α₁) zu bestimmen.

6. Mikroskopiesystem nach Anspruch 4 oder 5, wobei das erste Okularsystem eine erste Kamera (91) und das zweite Okularsystem eine zweite Kamera (91) umfaßt, und wobei die Steuerung (65) dazu ausgebildet ist, den Bilddrehwinkel (α₁) in Abhängigkeit von einem Vergleich des von der ersten Kamera aufgenommenen Bildes mit dem von der zweiten Kamera aufgenommenen Bild zu bestimmen.

7. Mikroskopiesystem nach einem der Ansprüche 1 bis 6, wobei das erste Okularsystem ein Zoomsystem (31, 37) zur änderbaren Einstellung einer Vergrößerung (V₁, V₂) des von dem ersten Okularsystem erzeugten Bildes der Objektebene (11) unabhängig von einer Vergrößerung des von dem zweiten Okularsystem erzeugten Bildes der Objektebene umfaßt und die wenigstens eine optische Einstellung die Vergrößerung (V₁, V₂) des von dem ersten Okularsystem erzeugten Bildes umfaßt, und wobei die Steuerung (65) dazu ausgebildet ist, das angezeigte Bild (81) aus dem ersten Eingabebild (67) durch Skalieren um einen in Abhängigkeit von der Vergrößerung (V₁, V₂) des von dem ersten Okularsystem erzeugten Bildes bestimmten Skalierungsfaktor zu erzeugen.

8. Mikroskopiesystem nach Anspruch 7, ferner umfassend einen Stellungssensor (49, 51) zum Erfassen einer Einstellung von Komponenten (33, 34, 39, 40) des Zoomsystems (31, 37) relativ zueinander, und wobei die Steuerung dazu ausgebildet ist, den Skalierungsfaktor (V₁, V₂) in Abhängigkeit von der erfaßten Einstellung zu bestimmen.

9. Mikroskopiesystem nach Anspruch 7 oder 8, wobei das erste Okularsystem eine erste Kamera (91) und das zweite Okularsystem eine zweite Kamera (91) umfaßt, und wobei die Steuerung (65) dazu ausgebildet ist, den Skalierungsfaktor (V₁, V₂) in Abhängigkeit von einem Vergleich des von der ersten Kamera (91) aufgenommenen Bildes mit dem von der zweiten Kamera (91) aufgenommenen Bild zu bestimmen.

10. Mikroskopiesystem nach einem der Ansprüche 1 bis 9, wobei wenigstens eines der mehreren Okularsysteme ein Stereo-Okularsystem ist.

11. Mikroskopieverfahren zur Darstellung jeweils eines vergrößerten Bildes einer Objektebene für mehrere Betrachter, wobei das Mikroskopieverfahren umfaßt:
lichtoptisches Erzeugen der Bilder der Objektebene (11) mit mehreren Optiken (21, 25), wobei eine erste der mehreren Optiken (21, 25) wenigstens einen unabhängig von einer zweiten der mehreren Optiken (21, 25) änderbaren optischen Parameter (α₁, α₂, V₁, V₂) aufweist,
elektronisches Erzeugen wenigstens einer ersten Darstellung aus einem ersten Eingabebild (67) in Abhängigkeit von dem wenigstens einen änderbaren optischen Parameter (α₁, α₂, V₁, V₂),
Darstellen eines Bildes, welches durch Überlagern eines Bildes der elektronisch erzeugten ersten Darstellung mit dem mit der ersten der mehreren Optiken (21, 25) lichtoptisch erzeugten Bild erzeugt wird, für einen ersten Betrachter,
elektronisches Erzeugen wenigstens einer zweiten Darstellung aus dem ersten Eingabebild (67), und
Darstellen eines Bildes, welches durch Überlagern eines Bildes der elektronisch erzeugten zweiten Darstellung mit dem mit der zweiten der mehreren Optiken (21, 25) lichtoptisch erzeugten Bild erzeugt wird, für einen zweiten Betrachter.

12. Mikroskopieverfahren nach Anspruch 11, wobei wenigstens ein Teil der ersten der mehreren Optiken (21, 25) um eine Achse (9) verlagerbar ist, und wobei das elektronische Erzeugen eine Drehung der Darstellung in Abhängigkeit von einer Verlagerung des Teils der ersten der mehreren Optiken (21, 25) um die Achse (9) umfaßt.

13. Mikroskopieverfahren nach Anspruch 11 oder 12, wobei eine Vergrößerung (V₁) der ersten der mehreren Optiken (21, 25) änderbar ist, und wobei das elektronische Erzeugen ein Skalieren der Darstellung in Abhängigkeit von der Vergrößerung (V₁) der ersten der mehreren Optiken (21, 25) umfaßt.

14. Mikroskopieverfahren nach einem der Ansprüche 11 bis 13, ferner umfassend Überlagern wenigstens einer unabhängig von dem wenigstens einen änderbaren optischen Parameter (α₁, α₂, V₁, V₂) aus einem zweiten Eingabebild (69) erzeugten Darstellung mit dem mit der ersten der mehreren Optiken (21, 25) lichtoptisch erzeugten Bild.

## Claims

1. A microscopy system for observing an object positionable in an object plane (11), said microscopy system comprising:
at least one objective (3) for receiving an object-side beam bundle (13) emanating from the object plane (11) and for transforming the object-side beam bundle (13) into an image-side beam bundle (15);
plural ocular systems (21, 25), wherein each one of the plural ocular systems (21, 25) comprises at least one ocular tube having at least one ocular for generating an image of the object plane (11) from the image-side beam bundle (15) for a respective observer (19L, 19R, 23L, 23R), wherein at least one optical setting (α₁, α₂, V₁, V₂) of a first one of the plural ocular systems (21, 25) is adjustable independently of a corresponding optical setting of a second one of the plural ocular systems (21, 25),
at least one image projector (53, 61) having a display (55) for feeding an image (81) displayed by the display into a beam path of one of the ocular systems such that the image of the object plane (11) is perceived by the observer in superposition with the image (81) of the display (55),
a controller (65) for generating the image (81) displayed by the display (55),
**characterized in that**
each one of the plural ocular systems (21, 25) comprises an image projector (53, 61) having a display (55) for feeding an image (81) displayed by the display into a beam path of the respective ocular system (21, 25), and
the controller (65) is configured to generate the image (81) displayed by the display (55) of the first one of the plural ocular systems (21, 25) from a first input image (67) in dependence of the at least one optical setting (α₁, α₂, V₁, V₂) of the first ocular system.

2. The microscopy system according to claim 1, wherein the controller (65) is further configured to generate the displayed image (81) from a second input image (69) independently of the at least one optical setting (α₁, α₂, V₁, V₂) of the first ocular system, said second input image being superimposed on the first input image (67).

3. The microscopy system according to claim 1 or 2, wherein the first ocular system comprises a first camera (91) and the second ocular system comprises a second camera (91), and wherein the controller (65) is configured to determine the at least one optical setting (α₁, α₂, V₁, V₂) in dependence of a comparison of an image detected by the first camera (91) with an image detected by the second camera (91).

4. The microscopy system according to one of claims 1 to 3, wherein the objective lens comprises an optical axis (9), wherein the ocular tube of the first ocular system (21, 25) is pivotable about the objective lens (3) and the optical axis (9) and the at least one optical setting (α₁, α₂) comprises the rotational position of the ocular tube (21, 25) about the optical axis (9), and wherein the controller (65) is configured to generate the displayed image (81) from the first input image (67) by rotating about an image rotation angle (α₁, α₂) determined in dependence of the rotational position of the ocular tube (21, 25).

5. The microscopy system according to claim 4, further comprising an angle detector (47) for detecting a rotational angle (α₁) between the ocular tube (21) and a holder (5) of the objective lens (3), and wherein the controller (65) is configured to determine the image rotation angle in dependence of the detected rotational angle (α₁).

6. The microscopy system according to claim 4 or 5, wherein the first ocular system comprises a first camera (91) and the second ocular system comprises a second camera (91), and wherein the controller (65) is configured to determine the image rotation angle (α₁) in dependence of a comparison of an image detected by the first camera and an image detected by the second camera.

7. The microscopy system according to one of claims 1 to 6, wherein the first ocular system comprises a zoom system (31, 37) for variably adjusting a magnification (V₁, V₂) of the image of the object plane (11) generated by the first ocular system independently of a magnification of the image of the object plane generated by the second ocular system, and wherein the at least one optical setting comprises the magnification (V₁, V₂) of the image generated by the first ocular system, and wherein the controller (65) is configured to generate the displayed image (81) from the first input image (67) by scaling with a scale factor determined in dependence of the magnification (V₁, V₂) of the image generated by the first ocular system.

8. The microscopy system according to claim 7, further comprising a position sensor (49, 51) for detecting a setting of components (33, 34, 39, 40) of the zoom system (31, 37) with respect to each other, and wherein the controller is configured to determine the scale factor (V₁, V₂) in dependence of the detected setting.

9. The microscopy system according to claim 7 or 8, wherein the first ocular system comprises a first camera (91) and the second ocular system comprises a second camera (91), and wherein the controller (65) is configured to determine the scale factor (V₁, V₂) in dependence of a comparison of the image detected by the first camera (91) and the image detected by the second camera (91).

10. The microscopy system according to one of claims 1 to 9, wherein at least one of the plural ocular systems is a stereo-binocular system.

11. A microscopy method for displaying respective magnified images of an object plane for plural observers, said microscopy method comprising:
light-optically generating images of the object plane (11) with plural optics (21, 25), wherein a first one of the plural optics (21, 25) has at least one optical parameter (α₁, α₂, V₁, V₂) adjustable independently of a second one of the plural optics (21, 25),
electronically generating at least a first representation from a first input image (67) in dependence of the at least one adjustable optical parameter (α₁, α₂, V₁, V₂),
displaying for a first observer an image generated by superimposing an image of the electronically generated first representation with the image light-optically generated by the first one of the plural optics (21, 25),
electronically generating at least a second representation from the first input image (67), and
displaying for a second observer an image generated by superimposing an image of the electronically generated second representation with the image light-optically generated by the second one of the plural optics (21, 25).

12. The microscopy method according to claim 11, wherein at least a portion of the first one of the plural optics (21, 25) is displaceable about an axis (9), and wherein electronically generating comprises a rotation of the representation in dependence of a displacement of the portion of the first one of the plural optics (21, 25) about the axis (9).

13. The microscopy method according to claim 11 or 12, wherein a magnification (V₁) of the first one of the plural optics (21, 25) is variable, and wherein electronically generating comprises a scaling of the representation in dependence of the magnification (V₁) of the first one of the plural optics (21, 25).

14. The microscopy method according to one of claims 11 to 13, further comprising superimposing at least one representation generated from a second input image (69) independent of the at least one adjustable optical parameter (α₁, α₂, V₁, V₂) with the image light-optically generated by the first one of the plural optics (21, 25).

## Revendications

1. Système de microscopie pour l'observation d'un objet pouvant être disposé dans un plan d'objet (11), le système de microscopie comprenant :
au moins un objectif (3) pour la réception d'un faisceau de rayons (13) objet ressortant du plan d'objet (11), et pour la transformation du faisceau de rayons (13) objet en un faisceau de rayons (15) image,
plusieurs systèmes oculaires (21, 25), chacun des multiples systèmes oculaires (21, 25) comprenant au moins un tube oculaire avec au moins un oculaire, afin de produire une image du plan d'objet (11) à partir du faisceau de rayons image (15) pour respectivement un observateur (19L, 19R, 23L, 23R), dans lequel au moins un réglage optique (α₁, α₂, V₁, V₂) d'un premier des multiples systèmes oculaires (21, 25) est modifiable indépendamment d'un réglage optique correspondant d'un second des multiples systèmes oculaires (21, 25),
au moins un projecteur d'image (53, 61) avec un dispositif d'affichage (55) pour le couplage d'une image (81) du dispositif d'affichage dans une trajectoire de faisceau d'un des systèmes oculaires, de telle sorte que l'image du plan d'objet (11) pour l'observateur apparaît superposée à l'image (81) du dispositif d'affichage (55), et
une commande (65) pour la production de l'image affichée (81) par le dispositif d'affichage (55),
**caractérisé en ce que**
chacun des multiples systèmes oculaires (21, 25) comprend un projecteur d'image (53, 61) avec un dispositif d'affichage (55) pour le couplage d'une image (81) du dispositif d'affichage dans une trajectoire de faisceau du système oculaire (21, 25) respectif, et
la commande (65) est configurée de façon à produire l'image affichée (81) par le dispositif d'affichage (55) du premier des multiples systèmes oculaires (21, 25) à partir d'une première image d'entrée (67) en fonction d'au moins un réglage optique (α₁, α₂, V₁, V₂) du premier système oculaire.

2. Système de microscopie selon la revendication 1, dans lequel la commande (65) est configurée de plus de façon à produire l'image affichée (81) à partir d'une seconde image d'entrée (69) superposée à la première image d'entrée (67), et ceci indépendamment d'au moins un réglage optique (α₁, α₂, V₁, V₂) du premier système oculaire.

3. Système de microscopie selon la revendication 1 ou 2, dans lequel le premier système oculaire comprend une première caméra (91) et le second système oculaire comprend une seconde caméra (91), et dans lequel la commande (65) est conçue de façon à déterminer le au moins un réglage optique (α₁, α₂, V₁, V₂) en fonction d'une comparaison entre l'image enregistrée par la première caméra (91) et l'image enregistrée par la seconde caméra (91).

4. Système de microscopie selon une des revendications 1 à 3, dans lequel l'objectif comprend un axe optique (9), le tube oculaire du premier système oculaire (21, 25) étant pivotant autour de l'objectif (3) et de l'axe optique (9), et le au moins un réglage optique (α₁, α₂) comprend la position pivotante du tube oculaire (21, 25) autour de l'axe optique (9), et la commande (65) étant conçue de façon à produire l'image affichée (81) à partir de la première image d'entrée (67) par la rotation selon un angle de rotation de l'image (α₁, α₂) défini en fonction de la position pivotante du tube oculaire (21, 25).

5. Système de microscopie selon la revendication 4, comprenant en outre un capteur d'angle (47) pour la détection d'un angle pivotant (α₁) entre le tube oculaire (21) et un support (5) de l'objectif (3), et la commande (65) étant configurée de façon à définir l'angle de rotation de l'image en fonction de l'angle pivotant (α₁) détecté.

6. Système de microscopie selon la revendication 4 ou 5, dans lequel le premier système oculaire comprend une première caméra (91) et le second système oculaire comprend une seconde caméra (91), et la commande (65) étant configurée de façon à déterminer l'angle de rotation de l'image (α₁) selon une comparaison entre l'image enregistrée par la première caméra et l'image enregistrée par la seconde caméra.

7. Système de microscopie selon une des revendications 1 à 6, le premier système oculaire comprenant un système de zoom (31, 37) en vue du réglage variable d'un agrandissement (V₁, V₂) de l'image produite par le premier système oculaire du plan d'objet (11) indépendamment d'un agrandissement de l'image produite par le second système oculaire du plan d'objet, et le au moins un réglage optique comprend l'agrandissement (V₁, V₂) de l'image produite par le premier système oculaire, et la commande (65) étant configurée de façon à produire l'image affichée (81) à partir de la première image d'entrée (67) par le changement d'échelle selon un facteur d'échelle défini en fonction de l'agrandissement (V₁, V₂) de l'image produite par le premier système oculaire.

8. Système de microscopie selon la revendication 7, comprenant en outre un capteur de position (49, 51) pour la détection d'un réglage des composants (33, 34, 39, 40) du système de zoom (31, 37) entre eux, et la commande étant configurée de façon à définir le facteur d'échelle (V₁, V₂) en fonction du réglage détecté.

9. Système de microscopie selon la revendication 7 ou 8, dans lequel le premier système oculaire comprend une première caméra (91) et le second système oculaire comprend une seconde caméra (91), et la commande (65) étant configurée de façon à déterminer le facteur d'échelle (V₁, V₂) selon une comparaison entre l'image enregistrée par la première caméra (91) et l'image enregistrée par la seconde caméra (91).

10. Système de microscopie selon une des revendications 1 à 9, dans lequel au moins un des multiples systèmes oculaires est un système oculaire stéréo.

11. Procédé microscopique à des fins de représentation de respectivement une image agrandie d'un plan d'objet pour plusieurs observateurs, le procédé de microscopie comprenant :
la production optique des images du plan d'objet (11) avec plusieurs optiques, une première des multiples optiques (21, 25) comprenant au moins un paramètre optique (α₁, α₂, V₁, V₂) modifiable indépendamment d'une seconde des multiples optiques (21, 25),
la production électronique d'au moins une première représentation à partir d'une première image d'entrée (67) en fonction d'au moins un paramètre optique modifiable (α₁, α₂, V₁, V₂),
la représentation d'une image qui est produite par superposition d'une image de la première représentation produite électroniquement à l'image produite optiquement avec la première des multiples optiques (21, 25), pour un premier observateur,
la production électronique d'au moins une seconde représentation à partir de la première image d'entrée (67), et
la représentation d'une image qui est produite par superposition d'une image de la seconde représentation produite électroniquement à l'image produite optiquement avec la seconde des multiples optiques (21, 25), pour un second observateur.

12. Procédé microscopique selon la revendication 11, dans lequel au moins une partie de la première des multiples optiques (21, 25) peut être déplacée autour d'un axe (9), et la production électronique comprenant une rotation de la représentation en fonction d'un déplacement de la partie de la première des multiples optiques (21, 25) autour de l'axe (9).

13. Procédé microscopique selon la revendication 11 ou 12, dans lequel un agrandissement (V₁) de la première des multiples optiques (21, 25) est modifiable, et la production électronique comprenant un changement d'échelle de la représentation en fonction de l'agrandissement (V₁) de la première des multiples optiques (21, 25).

14. Procédé microscopique selon une des revendications 11 à 13, comprenant en outre la superposition d'au moins une représentation produite à partir d'une seconde image d'entrée (69), indépendamment d'au moins un paramètre optique modifiable (α₁, α₂, V₁, V₂), à l'image produite optiquement avec la première des multiples optiques (21, 25).
